# EUROPEAN PATENT APPLICATION

(11) **EP 3 038 290 A1**
(43) Date of publication of application: **29.06.2016**
(21) Application number: 13893591.1
(22) Date of filing: 16.09.2013
(51) Int. Cl.: H04L 12/14

(54) **METHOD AND DEVICE FOR APPLICATION MANAGEMENT**

(71) Applicant: Huawei Technologies Co., Ltd., Longgang District Shenzhen, Guangdong 518129 (CN)
(72) Inventor: LAI, Zhoujian, Shenzhen Guangdong 518129 (CN); XIAO, Dong, Shenzhen Guangdong 518129 (CN); WANG, Han, Shenzhen Guangdong 518129 (CN); TAO, Tingjiang, Shenzhen Guangdong 518129 (CN)
(74) Representative: Körber, Martin Hans
(86) International application number: PCT/CN2013/083577
(87) International publication number: WO 2015/035648

(57) **Abstract**

The present invention discloses an application management method and apparatus, which relate to the field of mobile communications technologies, address a defect in the prior art that a network cannot learn about a local application, and achieves control over the local application. Specific embodiments of the present invention include: after a message, sent by an application server, of a local application is received, the message of the local application is processed according to a stored management policy of the local application, and a result of the processing is sent to the application server. According to a difference of received messages of a local application and a difference of stored corresponding management policies of the local application, application management is performed in different implementations in the embodiment of the present invention. Technical solutions of the present invention are mainly applied to an application management process.

## Description

### TECHNICAL FIELD

The present invention relates to the field of mobile communications technologies, and in particular, to an application management method and apparatus.

### BACKGROUND

User equipment (User Equipment, UE) needs to establish a connection to an external network (for example, the Internet) through a wireless network, so that the UE can enjoy a service of a third party application with the aid of the external network or a remote server. The wireless network mainly includes an access network and a core network (Core Network, CN), where the access network is responsible for managing radio resources, and functions related to services and applications are largely completed by the core network. In view of this, the access network is seen as a bridge connecting the UE and the core network; and service interaction between the UE and the external network needs to be based on a connection between the UE and the access network and a connection between the access network and the core network, and is finally implemented by a gateway on the core network side. Because a remote application Remote App (Application, application) is located behind the gateway of the core network and is far away from the UE, a service delay is prolonged, thereby resulting in a problem of low quality of service (Quality of Service, QoS) and affecting user experience. Therefore, a solution is needed to improve transmission efficiency and user experience.

Currently, an App is moved to the access network side to become a local Local App. The Local APP may be directly connected to a radio access device, or the Local APP may be disposed between the radio access device and the core network. In this way, the App is closer to the UE, thereby reducing the service delay and also saving Backhaul resources, where a backhaul exists from the access network to the App. In a process of implementing the foregoing solution, the radio access device provides some APIs (Application Programming Interface, application programming interface), and the Local App acquires various kinds of state information of the network by invoking APIs, such as a subscribing API and a querying API, provided by the radio access device. The radio access device further establishes a data channel with the Local App, and forwards application data of the UE and that of the remote server to the Local App. After interpreting service content of the UE, the Local App may selectively provide a service required by the UE. Optionally, the Local App is an application server.

In a process of implementing the foregoing prior art, the inventor finds that at least the following problem exist: The radio access network cannot learn about an application, thereby resulting in a problem of overuse of applications and further causing network congestion.

### SUMMARY

According to an application management method and apparatus provided in embodiments of the present invention, an application server opens API information to a radio access device, so that the radio access device selects, according to acquired API information and with aid of the application management apparatus, a server that provides application data, thereby solving a problem of network congestion caused by overuse of applications in the prior art.

To achieve the foregoing objectives, the following technical solutions are used in the embodiments of the present invention:
According to a first aspect, an application management apparatus is provided, where the apparatus is located on an access network side or a core network side and is configured to manage a local application provided on the access network side; and the apparatus includes a processor, a memory, and a communications interface, where the memory and the communications interface are separately connected to the processor;
   the memory is configured to store a management policy of the local application;
   the communications interface is configured to communicate with an application server or communicate with the application server through an access network device, where the application server is located on the access network side and configured to provide the local application; and
   the processor is configured to: receive a message of the local application through the communications interface, where the message is sent by the application server; process the message of the local application according to the management policy, stored in the memory, of the local application; and feed back a result of the processing to the application server through the communications interface.

In a first possible implementation of the first aspect, the management policy of the local application is set according to a type of the local application.

With reference to the first aspect or the first possible implementation of the first aspect, in a second possible implementation of the first aspect, the management policy of the local application includes an authentication policy, and the authentication policy includes an open application type and an open service level.

With reference to the first aspect, the first possible implementation of the first aspect, and the second possible implementation of the first aspect, in a third possible implementation of the first aspect, the message, received by the processor, of the local application is a registration request message; the registration request message includes type information of a local application to be registered and authentication information of a use class of the local application to be registered; and the processing, by the processor, the message of the local application according to the management policy, stored in the memory, of the local application includes:
performing, by the processor according to the authentication policy, authentication on the local application to be registered in the registration request message and the use class of the local application to be registered in the registration request message.

With reference to any one or more of the first aspect, the first possible implementation of the first aspect, the second possible implementation of the first aspect, and the third possible implementation of the first aspect, in a fourth possible implementation of the first aspect, the message, received by the processor, of the local application is a deregistration request message, where the deregistration request message includes identity information of a local application to be deregistered; and the processing, by the processor, the message of the local application according to the management policy, stored in the memory, of the local application includes:
performing, by the processor according to the management policy, stored in the memory, of the local application, authentication on a local application corresponding to the identity of the local application to be deregistered in the deregistration request message.

With reference to any one or more of the first aspect, the first possible implementation of the first aspect, the second possible implementation of the first aspect, and the third possible implementation of the first aspect, in a fifth possible implementation of the first aspect,
the message, received by the processor, of the local application is an application programming interface API query request message, where the API query request message includes a type of the local application and an identity of the local application; and
processing, by the processor, the API query request message includes:
acquiring, according to the identity of the local application in the API query request message, an API meeting a preset condition; making a determination on the API meeting the preset condition; and feeding back a result of the determination to the application server through the communications interface.

In a sixth possible implementation of the first aspect, the management policy further includes a charging policy.

According to a second aspect, an application management method is provided, where the method is used by an application management apparatus to manage a local application provided on an access network side, the application management apparatus is located on the access network side or a core network side and stores a management policy of the local application, and the method includes:
receiving, by the application management apparatus, a message of the local application, where the message is sent by an application server; processing the message of the local application according to the stored management policy of the local application; and feeding back a result of the processing to the application server through a communications interface.

In a first possible implementation of the second aspect, the management policy of the local application is set according to a type of the local application.

With reference to the second aspect or the first possible implementation of the second aspect, in a second possible implementation of the second aspect,
the management policy of the local application includes an authentication policy, and the authentication policy includes an open application type and an open service level.

With reference to the second aspect, the first possible implementation of the second aspect, and the second possible implementation of the second aspect, in a third possible implementation of the second aspect, the message, received by the application management apparatus, of the local application is a registration request message, where the registration request message includes type information of a local application to be registered and authentication information of a use class of the local application to be registered; and the application management apparatus performs, according to the authentication policy, authentication on the local application to be registered in the registration request message and the use class of the local application to be registered in the registration request message.

With reference to any one or more of the second aspect, the first possible implementation of the second aspect, the second possible implementation of the second aspect, or the third possible implementation of the second aspect, in a fourth possible implementation of the second aspect, the message, received by the application management apparatus, of the local application is a deregistration request message, where the deregistration request message includes identity information of a local application to be deregistered; and the application management apparatus performs, according to the management policy, stored in a memory, of the local application, authentication on a local application corresponding to the identity of the local application to be deregistered in the deregistration request message.

With reference to any one or more of the second aspect, the first possible implementation of the second aspect, the second possible implementation of the second aspect, or the third possible implementation of the second aspect, in a fifth possible implementation of the second aspect, the message, received by the application management apparatus, of the local application is an application programming interface API query request message, where the API query request message includes a type of the local application and an identity of the local application; and
processing, by the application management apparatus, the API query request message includes:
acquiring, according to the identity of the local application in the API query request message, an API meeting a preset condition; making a determination on the API meeting the preset condition; and sending a result of the determination to the application server.

In a sixth possible implementation of the second aspect, the management policy further includes a charging policy. After a message, sent by an application server, of a local application is received, the message of the local application is processed according to a stored management policy of the local application, and a result of the processing is sent to the application server through the communications interface. Based on varying received messages of a local application and varying stored management policies of the local application, the apparatus provided in the embodiments of the present invention implements, in an application management process, application authentication, service deregistration, state information interaction between an application server and the application management apparatus, and a data channel establishment process. Therefore, the deficiency in the prior art of a network not being able to learn about an application is eliminated, and control over a local application is achieved.

According to an application management method and apparatus provided in the embodiments of the present invention, after a message, sent by an application server, of a local application is received, the message of the local application is processed according to a stored management policy of the local application, and a result of the processing is sent to the application server. According to a difference of received messages of a local application and a difference of stored corresponding management policies of the local application, the apparatus provided in the embodiments of the present invention implements, in an application management process, application authentication, service deregistration, status information interaction between an application server and the application management apparatus, and a data channel establishment process. Therefore, a defect in the prior art that a network cannot learn about an application is addressed, and control over a local application is achieved.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic structural diagram of an application management apparatus according to an embodiment of the present invention;
FIG. 2 is a flowchart of an application management method according to another embodiment of the present invention;
FIG. 3 is a flowchart of an application management method according to another embodiment of the present invention;
FIG. 4 is a flowchart of another application management method according to another embodiment of the present invention;
FIG. 5 is a flowchart of yet another application management method according to another embodiment of the present invention; and
FIG. 6 is a flowchart of yet another application management method according to another embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

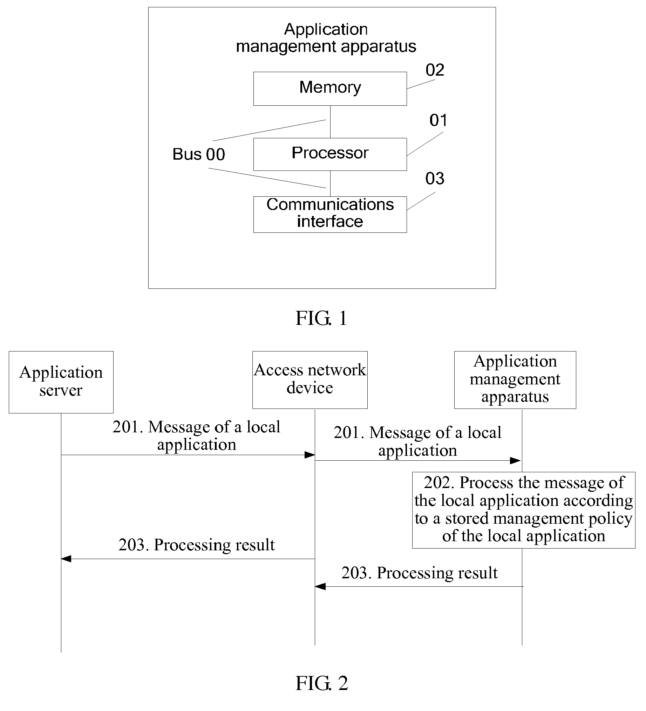

An embodiment of the present invention provides an application management apparatus, and the apparatus is located on an access network side or a core network side and configured to manage a local application on an access network. As shown in FIG. 1, the apparatus includes a processor 01, a memory 02, and a communications interface 03, where the memory 02 and the communications interface 03 are separately connected to the processor 01; and the memory 02, the processor 01, and the communications interface 03 are connected to each other through a bus 00.

The memory 02 is configured to store a management policy of a local application.

The communications interface 03 is configured to communicate with an application server or communicate with an application server through an access network device. The memory 02 may be a read-only memory (Read Only Memory, ROM), a static storage device, a dynamic storage device, or a random access memory (Random Access Memory, RAM). The memory 02 may store an operating system and another application program. When software or firmware is used to implement the technical solutions provided in the embodiments of the present invention, program code used to implement the technical solutions provided in the embodiments of the present invention is stored in the memory 02 and executed by the processor 01.

The processor 01 may use a general-purpose central processing unit (Central Processing Unit, CPU), a microprocessor, an application specific integrated circuit (Application Specific Integrated Circuit, ASIC), or one or more integrated circuits to execute a related program, so as to implement the technical solutions provided in the embodiments of the present invention.

The bus 00 may include a channel for transferring information between components (for example, a receiver 01, the memory 02, and the communications interface 03) in the apparatus.

It should be noted that although FIG. 1 merely depicts the processor 01, the memory 02, the communications interface 03, and the bus 00 as part of the hardware, in a specific implementation process, a person skilled in the art should understand that the terminal further includes another component required for implementing normal operation. Meanwhile, a person skilled in the art should understand that another hardware component for implementing another function may further be included according to a specific requirement.

It should be noted that in FIG. 1, the line connecting the processor 01, the memory 02, and the communications interface 03 is the bus 00.

It should be noted that in this embodiment, that the application management apparatus is located on the core network side is taken as an example.

The application server is located on the access network side and is configured to provide a local application, where the local application is an application provided by the access network side.

The processor 01 is configured to receive a message of a local application through the communications interface 03, where the message is sent by the application server; process the message of the local application according to the management policy, stored in the memory 02, of the local application; and send a result of the processing to the application server through the communications interface 03.

Optionally, the management policy of the local application is set according to a type of the local application. That is, an operator may set different management policies for different application types, so as to implement differentiated management of local applications.

Optionally, in an implementation scenario, the apparatus is configured to implement an authentication process for a local application.

Specifically, when the apparatus implements the authentication process,
the management policy, stored in the memory 02, of the local application includes an authentication policy, and the authentication policy includes an open application type and an open service level.
the message, received by the processor 01, of the local application is a registration request message, and according to the authentication policy stored in the memory 02, authentication is performed on a local application to be registered in the registration request message and a use class of the local application to be registered in the registration request message.

Optionally, the registration request message includes type information of the local application to be registered and authentication information of the use class of the local application to be registered.

Further, the processor 01 is further configured to send an authentication result of the local application to the application server through the communications interface 03.

It should be noted that the authentication result is used to indicate whether to allocate a resource to a corresponding local application in the registration request message. Specifically, if the authentication result indicates that the local application is authenticated successfully, a resource is allocated to the corresponding local application and the service level. Conversely, if the authentication result indicates that the local application fails to be authenticated, a resource is not allocated to the local application corresponding to the authentication failure.

Optionally, after the authentication succeeds, the processor 01 is further configured to initiate, for a local application of a first designated type, a process of establishing a public data link, so that the processor 01 sends application data of the first designated type to the application server through the communications interface 03, where the application of the first designated type includes a cache Cache application and a video transcoding application. As a result, the application server can learn about an ongoing service of UE. Correspondingly, for a local application of a second designated type, for example, a location-based service application, there is no need to establish a public data link.

Optionally, in another implementation scenario, the apparatus is configured to implement a deregistration process for a local application. Specifically, in the deregistration process,
the message, received by the processor 01, of the local application is a deregistration request message.

Optionally, the deregistration request message includes identity information of a local application to be deregistered.

Further, the processor 01 is configured to perform, according to the management policy, stored in the memory 02, of the local application, authentication on a local application corresponding to the identity of the local application to be deregistered in the received deregistration request message; and obtain an authentication result.

Optionally, the authentication result may further be sent to an access network device through the communications interface 03, so that the access network device determines, according to the received authentication result, whether to release a resource occupied by the local application to be deregistered.

Optionally, in another implementation scenario, the apparatus is further used in a process of state information interaction with the application server.

Specifically, the processor 01 is configured to process the received message of the local application, where the received message of the local application is an application programming interface API query request message.

Optionally, the API query request message includes a type of the local application and an identity of the local application.

Specifically, processing, by the processor 01, the API query request message includes: acquiring, according to the identity of the local application in the API query request message, an API meeting a preset condition; making a determination on the API meeting the preset condition; and feeding back a result of the determination to the application server through the communications interface 03.

The API meeting the preset condition refers to an API intersection, where the API intersection refers to an intersection of APIs that are allowed by a core network, in an authentication process, to be opened to the local application and APIs that can be opened by the access network device.

Optionally, the foregoing processor 01 is further configured to send, to the application server, a message requested by the API request. The message requested by the API request is sent by the application server to the application management apparatus, and the manner in which the application management apparatus feeds back the message requested by the API request includes the following three:
a first feedback manner: a one-off feedback, where static information, such as cell bandwidth and a UE capability, is fed back;
a second feedback manner: a periodical feedback, where real-time changing information needs to be periodically fed back to the application server, such as real-time changing information about current signal strength of UE, available bandwidth, and a currently available resource of a cell; and
a third feedback manner: an event-triggered feedback, where the event-triggered feedback is used for change-triggered information, such as a message trigged by a change of UE location, a change in the number of activated UEs, and a state change of access network device to idle or busy.

It should be noted that the foregoing three feedback manners are merely exemplary, and one or more other feedback manners may further be included according to an actual situation.

Optionally, the management policy, stored in the memory 02, of the local application further includes a charging policy.

Optionally, in another implementation scenario, the application management apparatus is further configured to establish a data channel.

It should be noted that for the purpose of well managing various kinds of information between the application server and the access network device, the processor 01 is further configured to establish a link bearer between each application server and the access network device.

Further, the link bearer includes but is not limited to a signaling link bearer, a public data link bearer, and a UE private data link bearer;

Specifically:
the signaling link bearer is used to transmit all kinds of state information, including an authentication message, a feedback message for acquiring a state, a bearer establishment request message, and the like. Optionally, in a process of establishing the signaling link bearer, standard protocols such as SCTP (Stream Control Transmission Protocol, Stream Control Transmission Protocol) may be used;
the public data link bearer is used to transmit application data of UE. Before the UE has a dedicated data bearer, if service data needs to be transmitted, the service data is transmitted on the public data bearer. Optionally, in a process of establishing the public data link bearer, standard protocols such as GTP-U (GPRS Tunneling Protocol for the user plane, GPRS Tunneling Protocol-User plane) may be used; and
the UE private data link bearer is used to transmit application data of specific UE. Optionally, in a process of establishing the UE private data link bearer, standard protocols such as GTP-U may be used.

Further, the processor 01 is further configured to send application data of a local application to the application server.

It should be noted that before the data of the local application is sent to the application server, it is determined that the application server is authenticated successfully and a public data link bearer is established. In addition, the processor 01 selects a management policy of the local application according to an application type and resource availability of the application server.

Optionally, the processor 01 analyzes, by analyzing an application layer protocol type of a UE packet, a type of an ongoing service of the UE, so as to deliver different data to different application servers. The application data sent by the application management apparatus may be all sent in data packets, or a part of the data is sent in data packets, and a part of the data is sent in data headers, and so on.

The processor 01 is further configured to identify an application type of the application data sent on the public data link bearer.

Further, according to the stored management policy of the local application, it is determined whether to provide an application for the UE. When it is determined to provide an application for the UE, a request message for establishing a UE private data bearer is sent to the application management apparatus, where the message carries application server information, information about an available service, and so on.

Optionally, the application server confirms that a UE private data bearer is established successfully and indicates, in a message, a relationship between the bearer and an original bearer:
The relationship between the bearer and the original bearer falls into two categories: a coexisting relationship and a serial relationship.

In the serial relationship, the access network device merely sends application data to the application server, and the application server may choose whether to send the application data to a core network.

In the coexisting relationship, application data is sent to the application server and a core network at the same time, and the access network device also receives data from the application server and the core network at the same time. For example, when the application server provides a Cache-type service, a serial mode is used for the bearers; and when the application server uses a supplemental service push, the coexisting relationship is used and an original service link bearer is retained.

The processor 01 is further configured to send a standard UE reconfiguration message to the UE for establishing a bearer.

According to the application management apparatus provided in this embodiment of the present invention, a processor receives a message of a local application through a communications interface 03, where the message of the local application is sent by an application server; processes the message of the local application according to a management policy, stored in a memory, of the local application; and sends a result of the processing to the application server through the communications interface. Based on varying received messages of local application and varying stored management policies of local application, the apparatus provided in this embodiment of the present invention implements, in an application management process, application authentication, service deregistration, state information interaction between an application server and the application management apparatus, and a data channel establishment process. Therefore, the deficiency in the prior art of a network not being able to learn about an application is eliminated, and control over a local application is achieved.

Another embodiment of the present invention provides an application management method. The method is used by an application management apparatus to manage a local application provided on an access network side, where the application management apparatus is located on a core network side or the access network side and stores a management policy of a local application. In the example of this embodiment of the present invention, the application management apparatus is located on the core network side. As shown in FIG. 2, the method includes the following steps:
201. Receive a message, sent by an application server, of a local application.
202. Process the message of the local application according to a stored management policy of the local application.
   Optionally, the management policy of the local application is set according to a type of the local application. That is, an operator may set different management policies for different application types, so as to implement differentiated management of local applications.
203. Feed back a result of the processing to the application server.

Optionally, the result of the processing is fed back to the application server through a communications interface.

The application management method provided in this embodiment of the present invention is applied to an application management apparatus; and after a message, sent by an application server, of a local application is received, the message of the local application is processed according to a management policy, stored in the application management apparatus, of the local application; and a result of the processing is fed back to the application server. Therefore, the deficiency in the prior art of not being able to mange a local application provided on an access network side is eliminated.

Another embodiment of the present invention provides an application management method. In an implementation, management of a local application includes an authentication policy, and a message, received by a processor in the application management apparatus, of a local application is a registration request message. The authentication policy includes an open application type and an open service level. The registration request message includes type information of a local application to be registered and authentication information of a use class of the local application to be registered.

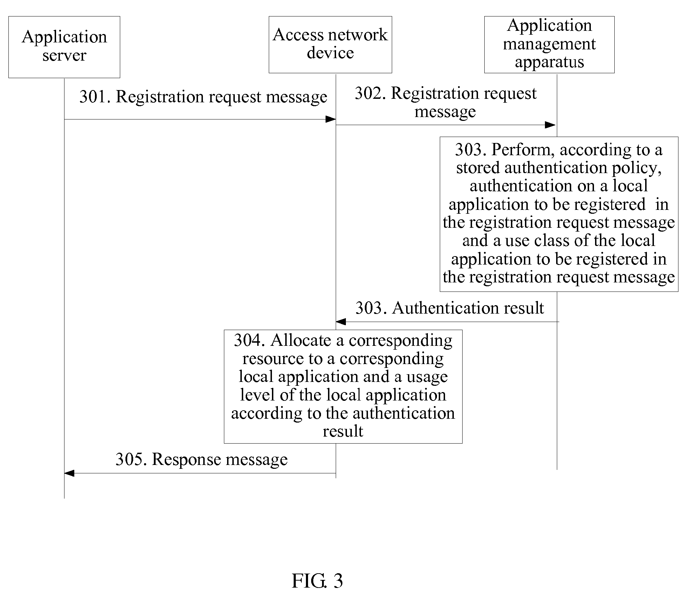

As shown in FIG. 3, the method includes the following steps:
301. An application server is started, and sends a registration request message to an access network device.
302. The access network device sends the registration request message to an application management apparatus.
303. The application management apparatus performs, according to a stored authentication policy, authentication on a local application to be registered in the registration request message and a use class of the local application to be registered in the registration request message, and sends an authentication result to the access network device.
304. The access network device allocates, according to the authentication result, a corresponding resource to a corresponding local application and a use class of the local application.
   Specifically, when the authentication succeeds, a corresponding resource is allocated to the local application and the use class of the local application; and when the authentication fails, resources are allocated.
305. After completing resource allocation, the access network device sends a response message to the application server.

It should be noted that after the authentication succeeds, the apparatus may further establish a public data link bearer for a local application whose application type is Cache or video transcoding, so that application data can be sent to the application server, and the application server can be aware of an ongoing service of UE. In addition, for some location-based local applications, there is no need to establish a public data link bearer.

The public data link bearer is used to transmit application data of the UE. Before the UE has a dedicated data bearer, service data is transmitted on the public data link bearer.

According to the application management method provided in this embodiment of the present invention, an authentication mechanism is established between an application server and an access network device, thereby ensuring authorized access to the application server and avoiding unauthorized access to the application server.

Another embodiment of the present invention provides an application management method. In another implementation, a message, received by a processor in the application management apparatus, of a local application is a deregistration request message. The deregistration request message includes identity information of a local application to be deregistered.

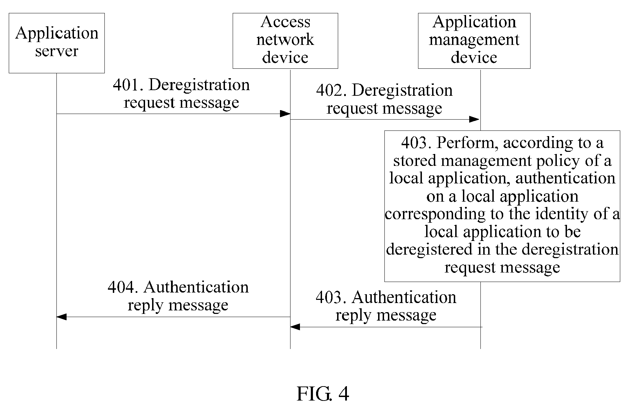

As shown in FIG. 4, the method includes the following steps:
401. An application server sends a deregistration request message to an access network device.
   Optionally, the deregistration request message further includes usage statistics information, for example, traffic information, of a local application during a service registration period.
402. The access network device sends the deregistration request message to an application management apparatus.
403. The application management apparatus performs, according to a stored management policy of the local application, authentication on a local application corresponding to an identity, in the deregistration request message, of a local application to be deregistered; and sends an authentication reply message to the access network device.
   Further, after receiving the authentication reply message, the access network device determines whether to release a resource of the local application, and provides, for the application management apparatus, service usage statistics information during a service running period of the application server, where the statistics information is used as charging reference by a core network.
404. The access network device sends the authentication reply message to the application server.

According to the application management method provided in this embodiment of the preset invention, a service deregistration process of a local application is established in an application management process, so that a network resource can be released in a timely manner and network consumption can be reduced.

Another embodiment of the present invention provides an application management method. In another implementation, a message, received by a processor in the application management apparatus, of a local application is an application programming interface API query request message, where the API query request message includes a type of the local application and an identity of the local application.

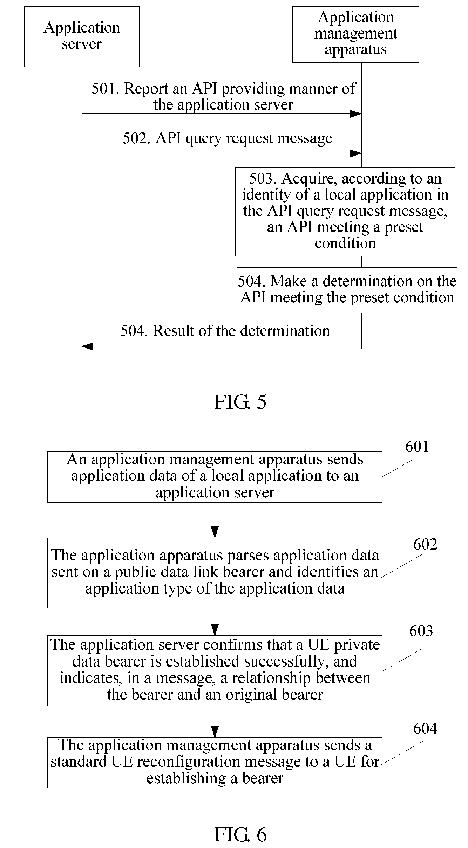

As shown in FIG. 5, the method includes the following steps:
501. An application server reports its API providing manner to an application management apparatus.
502. The application server sends an API query request message to the application management apparatus.
503. The application management apparatus acquires, according to an identity of a local application in the API query request message, an API meeting a preset condition.
   The API meeting the preset condition refers to an API intersection, where the API intersection refers to an intersection of APIs that are allowed by a core network, in an authentication process, to be opened to the local application and APIs that can be opened by the access network device.
   It should be noted that before the API meeting the preset condition is acquired, it needs to be determined that the application server has reported an API providing manner of the local application and that the local application has been authenticated.
504. The application management apparatus makes a determination on the API meeting the preset condition, and feeds back a result of the determination to the application server.

Optionally, the application management apparatus sends, to the application server, a feedback message of a message requested by an API request, and the message requested by the API request is sent by the application server to the application management apparatus. In addition, manners in which the application management apparatus feeds back the message requested by the API request include the following three:
a first feedback manner: a one-off feedback, where static information, such as cell bandwidth and a UE capability, is fed back;
a second feedback manner: a periodical feedback, where real-time changing information needs to be periodically fed back to the application server, such as real-time changing information about current signal strength of UE, available bandwidth, and a currently available resource of a cell; and
a third feedback manner: an event-triggered feedback, where the event-triggered feedback is used for change-triggered information, such as a message trigged by a change of UE location, a change in the number of activated UEs, and a state change of access network device to idle or busy.

It should be noted that the foregoing three feedback manners are merely exemplary, and one or more other feedback manners may further be included according to an actual situation.

Optionally, the application management apparatus may further send, according to a requirement of the application server, the feedback message of the message requested by the API request.

According to an implementation of the application management method provided in this embodiment of the present invention, a bidirectional publish channel of an API is established between an application server and an application management apparatus, so that both parties can be aware of each other's state, making it convenient to provide a service for a local application.

Another embodiment of the present invention provides an application management method, and in another implementation, the method is used to establish a data channel.

The data channel is a link bearer, and the link bearer includes but is not limited to a signaling link bearer, a public data link bearer, and a UE private data link bearer.

Specifically:
the signaling link bearer is used to transmit all kinds of state information, including an authentication message, a feedback message for acquiring a state, a bearer establishment request message, and the like. Optionally, in a process of establishing the signaling link bearer, standard protocols such as SCTP may be used;
the public data link bearer is used to transmit application data of UE. Before the UE has a dedicated data bearer, if service data needs to be transmitted, the service data is transmitted on the public data bearer. Optionally, in a process of establishing the public data link bearer, standard protocols such as GTP-U may be used; and
the UE private data link bearer is used to transmit application data of specific UE. Optionally, in a process of establishing the UE private data link bearer, standard protocols such as GTP-U may be used.

In this implementation of the method, establishing a UE-level data channel is used as an example for description. As shown in FIG. 6, the method includes the following steps:
601. Send application data of a local application to an application server.
   It should be noted that before the data of the local application is sent to the application server, it is determined that the application server is authenticated successfully and a public data link bearer is established. In addition, an application management apparatus selects a management policy of the local application according to an application type and resource availability of the application server.
   Optionally, the application management apparatus may provide a module, and the module analyzes, by analyzing an application layer protocol type of a UE packet, a type of an ongoing service of the UE, so as to deliver different data to different application servers. The application data sent by the application management apparatus may be all sent in data packets, or a part of the data is sent in data packets, and a part of the data is sent in data headers, and so on.
602. The application management apparatus parses application data sent on a public data link bearer and identifies an application type of the application data.
   Further, according to the stored management policy of the local application, it is determined whether to provide an application for the UE. When it is determined to provide an application for the UE, a request message for establishing a UE private data bearer is sent to the application management apparatus, where the message carries application server information, information about an available service, and the like.
603. The application server confirms that a UE private data bearer is established successfully and indicates, in a message, a relationship between the bearer and an original bearer.
   The relationship between the bearer and the original bearer falls into two categories: a coexisting relationship and a serial relationship.
   In the serial relationship, an access network device merely sends application data to the application server, and the application server may choose whether to send the application data to a core network.
   In the coexisting relationship, application data is sent to the application server and a core network at the same time, and the access network device also receives data from the application server and the core network at the same time. For example, when the application server provides a Cache-type service, a serial mode is used for the bearers; and when the application server uses a supplemental service push, the coexisting relationship is used and an original service link bearer is retained.
   Further, in the coexisting relationship, the application management apparatus may determine, according to an indication of the application server and a resource state of the application management apparatus, whether to establish an air interface bearer with the UE so as to associate this bearer with a bearer between the application server and the application management apparatus. If an air interface bearer is to be established, the following step 604 is performed.
604. The application management apparatus sends a standard UE reconfiguration message to the UE for establishing a bearer.

Further, if the UE accepts, a reconfiguration success is returned.

Optionally, the method may further implement release of a UE-level data channel.

Specifically, a release process includes:
a. A core network sends a request for releasing a UE bearer to an access network device.
b. The access network device detects whether a bearer associated with the application server exists in bears of UE.
   Specifically, when the bearer associated with the application server exists, the access network device sends a release message to the application server, stops data sending, and releases a bearer resource.
c. After receiving the release message, the application server stops sending data and releases a bearer resource.

According to the application management method provided in this embodiment of the present invention, data pre-identification is implemented at an access network device, and then a distribution mechanism is selected, so that an application is precisely located, thereby reducing network consumption and improving efficiency of each application server.

It may be clearly understood by a person skilled in the art that, for the purpose of convenient and brief description, division of the foregoing functional modules is merely used as an example. The foregoing functions may be assigned to different functional modules according to an actual need, that is, an internal structure of the apparatus is divided into different functional modules, to complete all or a part of the functions described above. For a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in others. For example, the described apparatus embodiment is merely exemplary. For example, the module or unit division is merely logical function division and may be other division in an actual implementation. For example, a plurality of units or components may be combined or integrated into another system, or some features may be ignored or not performed. Furthermore, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected according to an actual need to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in a form of a software functional unit and sold or used as an independent product, the integrated unit may be stored in a computer-readable storage medium. Based on such an understanding, the technical solutions of the present invention essentially, or the part contributing to the prior art, or all or a part of the technical solutions may be implemented in the form of a software product. The software product is stored in a storage medium and includes several instructions for instructing a computer device (which may be a personal computer, a server, or a network device) or a processor (processor) to perform all or a part of the steps of the methods described in the embodiments of the present invention. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. An application management apparatus, wherein the apparatus is located on an access network side or a core network side and is configured to manage a local application provided on the access network side; and the apparatus comprises a processor, a memory, and a communications interface, wherein the memory and the communications interface are separately connected to the processor;
the memory is configured to store a management policy of the local application;
the communications interface is configured to communicate with an application server or communicate with an application server through an access network device, wherein the application server is located on the access network side and configured to provide the local application; and
the processor is configured to: receive a message of the local application through the communications interface, wherein the message is sent by the application server; process the message of the local application according to the management policy, stored in the memory, of the local application; and feed back a result of the processing to the application server through the communications interface.

2. The apparatus according to claim 1, wherein the management policy of the local application is set according to a type of the local application.

3. The apparatus according to claim 1 or 2, wherein the management policy of the local application comprises an authentication policy, and the authentication policy comprises an open application type and an open service level.

4. The apparatus according to claim 3, wherein the message, received by the processor, of the local application is a registration request message, and the registration request message comprises type information of a local application to be registered and authentication information of a use class of the local application to be registered; and the processing, by the processor, the message of the local application according to the management policy, stored in the memory, of the local application comprises:
performing, by the processor according to the authentication policy, authentication on the local application to be registered in the registration request message and the use class of the local application to be registered in the registration request message.

5. The apparatus according to any one of claims 1 to 4, wherein the message, received by the processor, of the local application is a deregistration request message, and the deregistration request message comprises identity information of a local application to be deregistered; and
the processing, by the processor, the message of the local application according to the management policy, stored in the memory, of the local application comprises:
performing, by the processor according to the management policy, stored in the memory, of the local application, authentication on a local application corresponding to the identity of the local application to be deregistered in the deregistration request message.

6. The apparatus according to any one of claims 1 to 4, wherein:
the message, received by the processor, of the local application is an application programming interface API query request message, and the API query request message comprises a type of the local application and an identity of the local application; and
processing, by the processor, the API query request message comprises:
acquiring, according to the identity of the local application in the API query request message, an API meeting a preset condition; making a determination on the API meeting the preset condition; and feeding back a result of the determination to the application server through the communications interface.

7. The apparatus according to claim 1, wherein the management policy further comprises a charging policy.

8. An application management method, used by an application management apparatus to manage a local application provided on an access network side, wherein the application management apparatus is located on the access network side or a core network side and stores a management policy of the local application, and the method comprises:
receiving, by the application management apparatus, a message of the local application, wherein the message is sent by an application server; processing the message of the local application according to the stored management policy of the local application; and feeding back a result of the processing to the application server through a communications interface.

9. The method according to claim 8, wherein the management policy of the local application is set according to a type of the local application.

10. The method according to claim 8 or 9, wherein the management policy of the local application comprises an authentication policy, and the authentication policy comprises an open application type and an open service level.

11. The method according to claim 10, wherein the message, received by the application management apparatus, of the local application is a registration request message, and the registration request message comprises type information of a local application to be registered and authentication information of a use class of the local application to be registered; and
the application management apparatus performs, according to the authentication policy, authentication on the local application to be registered in the registration request message and the use class of the local application to be registered in the registration request message.

12. The method according to any one of claims 8 to 11, wherein the message, received by the application management apparatus, of the local application is a deregistration request message, and the deregistration request message comprises identity information of a local application to be deregistered, and
the application management apparatus performs, according to the management policy, stored in a memory, of the local application, authentication on a local application corresponding to the identity of the local application to be deregistered in the deregistration request message.

13. The method according to any one of claims 8 to 11, wherein the message, received by the application management apparatus, of the local application is an application programming interface API query request message, and the API query request message comprises a type of the local application and an identity of the local application; and
processing, by the application management apparatus, the API query request message comprises:
acquiring, according to the identity of the local application in the API query request message, an API meeting a preset condition; making a determination on the API meeting the preset condition; and sending a result of the determination to the application server.

14. The method according to claim 13, wherein the management policy further comprises a charging policy.
